# EUROPÄISCHE PATENTSCHRIFT

(11) **EP 1 980 383 B1**
(45) Veröffentlichungstag und Bekanntmachung des Hinweises auf die Patenterteilung: **28.08.2013**
(21) Anmeldenummer: 08405082.2
(22) Anmeldetag: 18.03.2008
(51) Int. Cl.: B29C 70/46, B29C 70/16, B29C 43/34

(54) **Pressformverfahren und Anlage zur Herstellung von Bauteilen aus langfaserverstärktem Thermoplast**
Compression moulding method and apparatus for manufacturing components from long fibre reinforced thermoplastic
Procédé et dispositif de moulage par compression destiné à la fabrication de composants à partir de thermoplastique renforcé par des fibres longues

(30) Priorität: 20.03.2007 CH 4392007
(43) Veröffentlichungstag der Anmeldung: 15.10.2008
(73) Patentinhaber: Weber Automotive AG-Holding, 8700 Küsnacht (CH)
(72) Erfinder: Jaggi, Diego, 8049 Zürich (CH)

(56) Entgegenhaltungen:
- WO-A-03/074899
- WO-A-2004/024426

## Beschreibung

Die Erfindung betrifft ein Fliesspressverfahren zur Herstellung von Bauteilen aus langfaserverstärktem Thermoplast gemäss Oberbegriff von Anspruch 1 sowie eine Anlage zur Herstellung solcher Bauteile. Mit solchen bekannten Fliesspressverfahren können relativ lange Fasern verarbeitet werden und dadurch Bauteile mit höheren, besseren mechanischen Eigenschaften geschaffen werden. Ein solches Verfahren ist beispielsweise aus der WO2004/024426 bekannt zur Herstellung von Bauteilen aus Langfaser-Thermoplast, welche zusätzlich noch eine integrierte EndlosfaserVerstärkung enthalten. In diesen bekannten Fliesspressverfahren wird ein geschmolzener langfaserverstärkter Thermoplast LFT in die Bauteilkavität möglichst zentral abgelegt, so dass kurze Fliesswege bis zum vollständigen Ausfüllen der Bauteilkavität erreicht werden. Dabei entstehen jedoch Einlegeschatten an beiden Oberflächen des Bauteils, da sich die eingelegte LFT-Masse am gekühlten Werkzeug verfestigt, bis die LFT-Masse durch Schliessen des Werkzeugs und Verdrängen bewegt wird zum Ausfüllen der Werkzeugkavität. Bei Sichtoberflächen sind solche Schatten sehr störend und daher unzulässig, so dass z.B. zuerst eine zusätzliche Deckfolie als Schichtoberfläche vor dem Einbringen der LFT-Masse ins Werkzeug eingelegt werden muss, um damit eine akzeptable Bauteiloberfläche zu erhalten. Dies bedingt jedoch grosse Einschränkungen in der Formgebung der Oberfläche und erhebliche zusätzliche Kosten und Aufwand.

Es ist nun Aufgabe der vorliegenden Erfindung, die Nachteile und Beschränkungen der bekannten Fliesspressverfahren zu überwinden und Bauteile ohne Einlegeschatten an den beidseitigen Oberflächen zu schaffen mit einwandfreien Sichtoberflächen ohne zusätzliche Deckfolien. Diese Aufgabe wird erfindungsgemäss gelöst durch ein Fliesspressverfahren nach Anspruch 1 und mit einer Anlage nach Anspruch 10 zur Herstellung von Bauteilen mit diesem Verfahren. Durch die Schaffung eines Werkzeugs mit einem zusätzlichen separaten Einlegebereich neben einem Bauteilbereich, von welchem aus eine eingelegte geschmolzene LFT-Masse von aussen mittels einer Presse in den ganzen Bauteilbereich hinein gedrückt und verpresst wird, wird jedes Entstehen eines Einlegeschattens verhindert und so werden Bauteile mit hohen mechanischen Eigenschaften und einwandfreien, ganzseitigen Sichtoberflächen geschaffen.

Die abhängigen Patentansprüche betreffen vorteilhafte Weiterbildungen der Erfindung mit besonderen Vorteilen bezüglich rationeller Herstellung und optimaler Ausbildung von Sichtoberflächen.

Im Folgenden wird die Erfindung anhand von Ausführungsbeispielen und Figuren weiter erläutert, dabei zeigen:
- Fig. 1a - c: eine Anlage zur Durchführung des erfindungsgemässen Verfahrens mit einem Werkzeug, welches einen separaten Einlegebereich ausserhalb des Bauteilbereichs aufweist,
- Fig. 1a: in einem ersten Verfahrensschritt das Einlegen einer LFT-Masse in den Einlegebereich,
- Fig. 1b: in einem zweiten Verfahrensschritt das Einfliessen der LFT-Masse in den Bauteilbereich,
- Fig. 1c: das vollständige Verpressen und Verfestigen der LFT-Masse,
- Fig. 1d: ein resultierendes hergestelltes Bauteil,
- Fig. 2: ein erfindungsgemässes Werkzeug im Grundriss mit einem Einlegebereich und einem Bauteilbereich,
- Fig. 3: ein Werkzeug mit zwei Bauteilkavitäten und einem dazwischen liegenden Einlegebereich,
- Fig. 4: ein Werkzeug mit drei Bauteilkavitäten und einem zentral dazwischen liegenden Einlegebereich,
- Fig. 5: einen Bauteilbereich mit einer inneren Ausnehmung, in welcher ein Einlegebereich gebildet ist,
- Fig. 6: eine reduzierte Schichtdicke und einen Schieber im Einlegebereich,
- Fig. 7: Narbungsoberflächen im Bauteilbereich und eine sich verjüngende Einlegekavität,
- Fig. 8: ein Bauteil mit gerichteter Faserorientierung am Einschwemmrand.

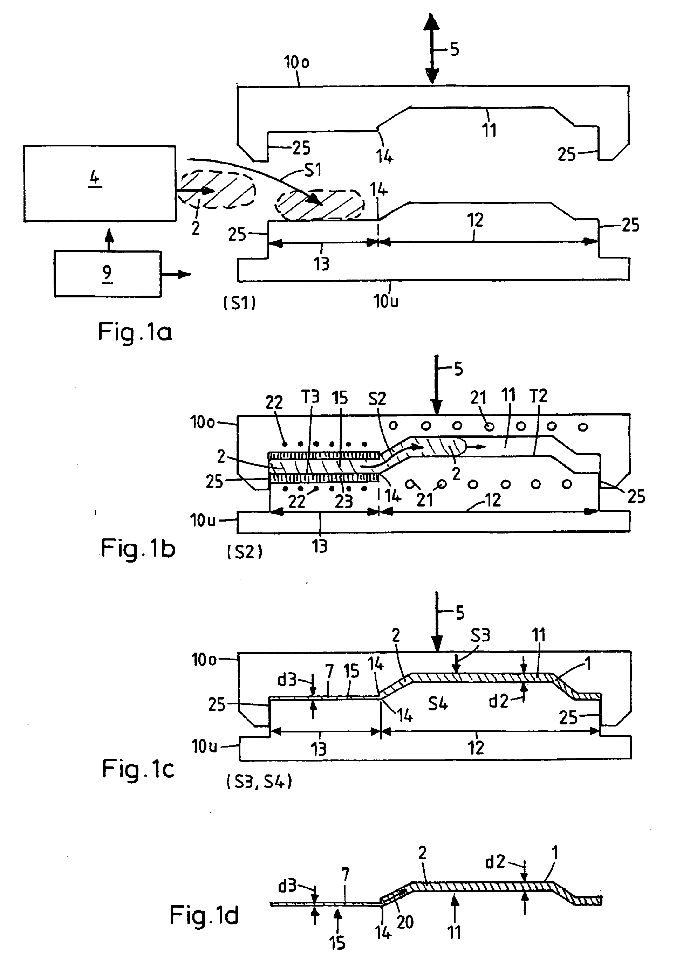

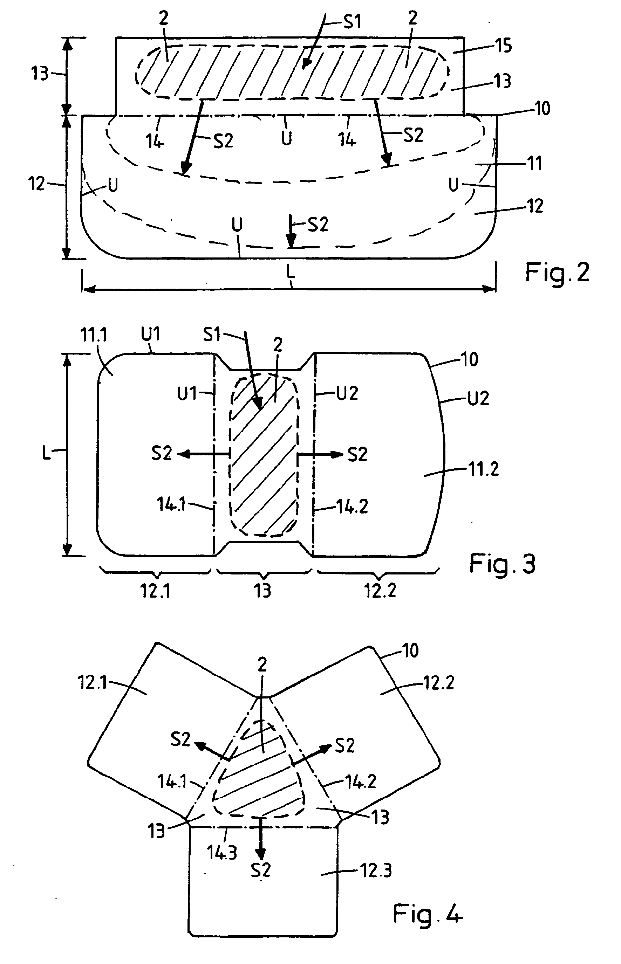

Die Fig. 1 a - c illustrieren das erfindungsgemässe Fliesspressverfahren zur Herstellung von Bauteilen aus langfaserverstärktem Thermoplast LFT in einer Anlage mit einer LFT-Schmelz- und Eintragsvorrichtung 4, einer Presse 5, einem zweiteiligen Werkzeug 10o, 10u und einer Steuerung 9. Das Werkzeug weist einen Bauteilbereich 12 mit einer Bauteilkavität 11 und einen direkt daran anschliessenden Einlegebereich 13 mit einer Einlegekavität 15 auf. Ein Einschwemmrand 14 bildet die Begrenzung zwischen dem Einlegebereich 13 und dem Bauteilbereich 12 (siehe Fig. 2). Das Fliesspressverfahren verläuft in vier Verfahrensschritten S1- S4.

In einem ersten Schritt S1 wird eine aufbereitete und aufgeschmolzene LFT-Masse 2 mittels der Schmelz- und Eintragsvorrichtung 4 (bestehend z.B. aus einem Extruder und einem Handlingelement) in den Einlegebereich 13 des unteren Werkzeugs 10u abgelegt. Unmittelbar anschliessend wird im zweiten Schritt S2 das Werkzeug mittels der Presse 5 geschlossen und die geschmolzene LFT-Masse 2 dadurch kontinuierlich über den Einschwemmrand 14 hinweg in den Bauteilbereich 12 gedrückt bis zum vollständigen Ausfüllen der Bauteilkavität 11. Anschliessend wird die LFT-Masse weiter vollständig verpresst und kompaktiert (Schritt S3) und unter Druck verfestigt durch Abkühlung in Kontakt mit dem gekühlten Werkzeug 10 (Schritt S4).

Vor dem Beginn des Einfliessens über den Einschwemmrand 14 hinweg bis zum vollständigen Ausfüllen der Bauteilkavität wird dabei die Bewegung der LFT-Masse 2 nicht unterbrochen, d.h. es erfolgt ein kontinuierliches Einfliessen der LFT-Masse bis in ihre Endlage im ganzen Bauteilbereich, so dass keine Kühlschatten infolge Stehenbleiben und lokalem Verfestigen entstehen können wie dies in bisherigen Verfahren beim Einlegen der LFT-Masse in die Bauteilkavität auftritt.

Die Fig. 1b illustriert das Einfliessen der LFT-Masse 2 im Verfahrensschritt S2. Dabei sind Tauchkanten 25 am Werkzeug am Einlegebereich 13 so ausgebildet, dass sie während dem Einschwemmen der LFT-Masse 2 das Werkzeug schliessen und damit ein Ausfliessen nach Aussen verhindert wird.

Der Bauteilbereich 12 weist eine Kühlung 21 (z.B. mit Wasser) auf, um ein relativ rasches Verfestigen der LFT-Masse 2 im Verfahrensschritt S4 zu erreichen. Der Einlegebereich 13 andererseits wird vorzugsweise jedoch so heiss gehalten, dass sich die LFT-Masse in den Verfahrensschritten S1 und S2 hier nicht verfestigt, sondern ungehindert in den Bauteilbereich 12 einfliessen kann. Dies wird erreicht durch entsprechende thermische Konditionierung, so dass die Temperatur T3 im Einlegebereich 13 immer höher ist als die Temperatur T2 im Bauteilbereich 12. Dazu kann der Einlegebereich 13 - im Gegensatz zum Bauteilbereich - nicht gekühlt sein, oder sogar geheizt werden, z.B. mit einer elektrischen Heizung 22, und/oder er kann auch eine thermische Isolation 23 aufweisen.

Fig. 1c zeigt das Werkzeug 10o, 10u in den Verfahrensschritten S3 und S4 mit der vollständig verpressten LFT-Masse 2 und mit unterschiedlichen Schichtdicken d2 und d3 im Bauteilbereich 12 und im Einlegebereich 13.

Fig. 1d zeigt das resultierende Bauteil 1 nach der Entnahme aus dem Werkzeug und die verbleibende LFT-Restmasse 7 aus der Einlegekavität 15. Beim Einfliessen entsteht eine Vorzugsorientierung der Langfasern LF in Fliessrichtung. Am Einschwemmrand 14 weist das Bauteil daher eine Faserorientierung 20 in Einfliessrichtung auf, d.h. die Langfasern sind hier in orthogonaler Richtung zum Bauteilrand (14) orientiert, während am Rand des Bauteils ausserhalb des Einschwemmrands 14 keine orthogonale Vorzugsrichtung der Langfasern LF besteht. Zur weiteren Verstärkung eines Bauteils kann nach Bedarf zusätzlich auch eine lokale Endlosfaserverstärkung, z.B. ein Endlosfaserprofil, in die Bauteilkavität eingelegt werden.

Fig. 2 zeigt ein erfindungsgemässes Werkzeug im Grundriss mit einem Bauteilbereich 12 und einem Einlegebereich 13, in welchem im Verfahrensschritt S1 eine geschmolzene LFT-Masse 2 formgerecht eingebracht wird. Im Schritt S2 fliesst die LFT-Masse über den Einschwemmrand 14 hinweg in den Bauteilbereich 12 ein.

Um vorzugsweise kurze Fliesswege und ein rasches, vollständiges Ausfüllen der Bauteilkavität zu erreichen, können sich der Einlegebereich 13 und der Einschwemmrand 14 im Wesentlichen möglichst entlang der längsten Ausdehnung L der Bauteilkavität 11 erstrecken. Mit Vorteil kann sich der Einschwemmrand 14 über mindestens 20 - 25%, besser noch über 30% des Umfangs U der Bauteilkavität erstrecken.

Fig. 3 zeigt ein Werkzeug mit zwei Bauteilbereichen 12.1, 12.2 und entsprechend mit zwei Bauteilkavitäten 11.1, 11.2, welche mit einem dazwischen liegenden Einlegebereich 13 je über einen Einschwemmrand 14.1, 14.2 verbunden sind.

Fig. 4 zeigt ein Werkzeug mit drei Bauteilbereichen 12.1, 12.2, 12.3, welche mit einem zentralen Einlegebereich 13, je mit einem Einschwemmrand 14.1, 14.2, 14.3 verbunden sind. Diese Beispiele zeigen, dass so auf rationelle Weise mehrere Bauteile gleichzeitig mit einem Werkzeug hergestellt werden können. Diese Bauteile können gleich oder auch unterschiedlich geformt sein, z.B. eine Behälterschale und einen zugehörigen Deckel bilden.

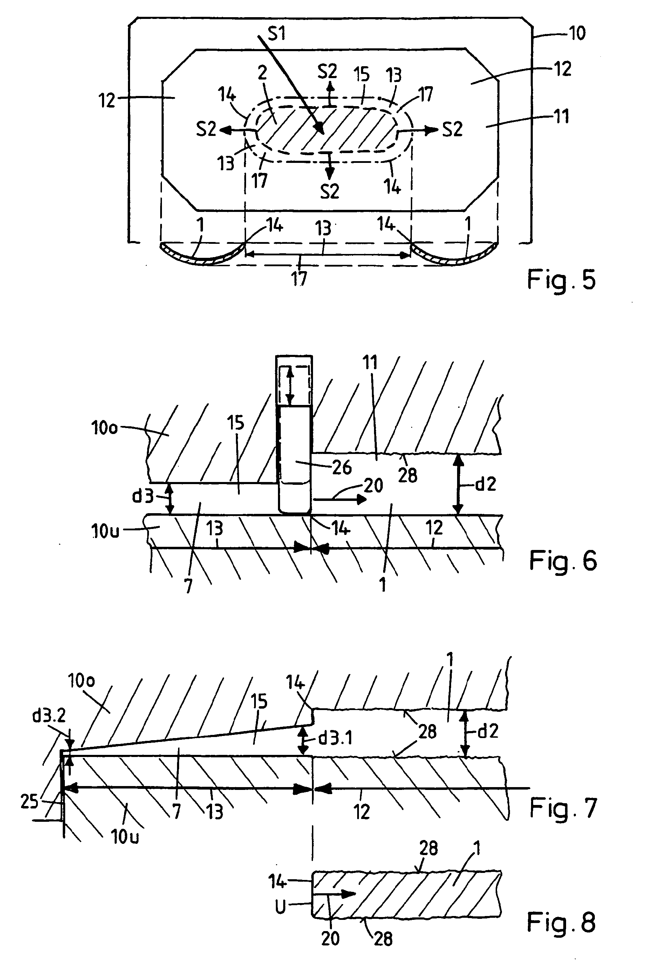

Fig. 5 zeigt ein Beispiel mit einem Bauteil 1, welches eine innere Ausnehmung 17 aufweist, hier z.B. in Form einer ringförmigen Schale. Das zugehörige Werkzeug 10 weist einen Bauteilbereich 12 mit der inneren Ausnehmung 17 auf, welche hier als Einlegebereich 13 ausgebildet ist. Der Einschwemmrand 14 bildet dabei den Rand der Ausnehmung 17.

Fig. 6 zeigt im Schnitt einen Teil eines Werkzeugs 10o, 10u, wobei hier die Schichtdicke d3 der Einlegekavität 15 nach dem Verpressen kleiner ist als die Schichtdicke d2 der Bauteilkavität 11: d3 kann vorzugsweise weniger als 30% von d2 betragen, z.B. auch nur 10 - 20%, um damit die Abfallmenge, d.h. die Restmasse 7 der Einlegekavität 15 stark zu reduzieren. Diese LFT-Restmasse 7 kann rezykliert werden. Vorzugsweise kann dazu auch das Volumen der Einlegekavität höchstens 20%, besser noch höchstens 10 - 15% des Volumens der Bauteilkavität betragen.

Fig. 6 zeigt weiter einen bewegbaren Schieber 26 im oberen Werkzeug 10o, welcher am Einschwemmrand 14 angeordnet ist und mit welchem der Einlegebereich 13 nach vollständigem Einschwemmen der LFT-Masse 2 abgetrennt werden kann, um das Bauteil 1 möglichst vollständig vom Restmaterial 7 zu trennen.

Fig. 7 zeigt ein weiteres Beispiel mit einem Einlegebereich 13 bzw. einer Einlegekavität 15, welche ein kleinere Schichtdicke d3 aufweist als der Bauteilbereich mit d2. Zudem ist hier diese Einlegekavität 15 vom Einschwemmrand 14 aus (mit d3.1) gegen den Aussenrand hin (d3.2) sich verjüngend ausgebildet, um die Restmasse 7 zu reduzieren. Beispielsweise kann d3.1 das 3 - 5-fache von d3.2 betragen. Der Bauteilbereich 12 weist hier zudem beidseitige Narbungsoberflächen 28 oben und unten auf. Ein Beispiel mit einseitiger Narbungsoberfläche 28 oben zeigt Fig. 6. Damit können Sichtoberflächen des Bauteils weiter gestaltet und optimiert werden.

Fig. 8 zeigt ein der Fig. 7 entsprechendes Bauteil 1 mit beidseitigen Narbungsoberflächen 28. Wie schon zu Fig. 1d erläutert, ist auch hier eine vorherrschende Faserorientierung in Einfliessrichtung 20 an einem Randbereich 14 des Bauteilumfangs U dargestellt, welcher dem Einschwemmrand entspricht.

Im Rahmen dieser Beschreibung werden folgende Bezeichnungen verwendet:
- 1: Bauteil
- 2: LFT Masse
- 4: LFT Schmelz- und Eintragsvorrichtung
- 5: Presse
- 7: LFT-Restmasse in 15
- 9: Steuerung
- 10: Werkzeug
- 10o, 10u: oberes, unteres Werkzeug
- 11: Bauteilkavität
- 12: Bauteilbereich
- 13: Einlegebereich
- 14: Einschwemmrand, Randbereich
- 15: Einlegekavität
- 17: Ausnehmung in 1, 11
- 20: Faserorientierung, Fliessrichtung
- 21: Kühlung
- 22: Heizung
- 23: thermische Isolation
- 25: Tauchkanten
- 26: Schieber
- 28: Narbungsoberfläche
- LFT: Langfaser-Thermoplast
- Si: Verfahrensschritte
- S1: Einlegen von 2
- S2: Verpressen und Einschwemmen in 12
- S3: vollständig verpressen, kompaktieren
- S4: verfestigen, abkühlen
- d2: Schichtdicke der Bauteilkavität 11
- d3: Schichtdicke der Einlegekavität 15
- U: Umfang von 11
- L: längste Ausdehnung von 11
- T2: Temperatur von 12
- T3: Temperatur von 13

## Patentansprüche

1. Fliesspressverfahren zur Herstellung von Bauteilen (1) aus langfaserverstärktem Thermoplast (LFT), mit einer LFT-Schmelz- und Eintragsvornchtung (4), einer Presse (5), einem zweiteiligen Werkzeug (10) mit einer Bauteilkavität (11) und einer Steuerung (9),
**dadurch gekennzeichnet, dass**
das Werkzeug einen Bauteilbereich (12) mit einem Einschwemmrand (14) und einen an den Bauteilbereich anschliessenden Einlegebereich (13) aufweist, wobei die LFT-Masse (2) mittels der Schmelz- und Eintragsvornchtung (4) aufgeschmolzen und in den Einlegebereich (13) abgelegt wird (S1),
dann das Werkzeug geschlossen wird und die LFT-Masse mittels der Presse vom Einlegebereich (13) über den Einschwemmrand (14) in den Bauteilbereich (12) gedrückt wird (S2) bis zum Ausfüllen der Bauteilkavität (11),
dann vollständig verpresst (S3) und anschliessend durch Abkühlung verfestigt wird (S4).

2. Verfahren nach Anspruch 1, **dadurch gekennzeichnet, dass** das Werkzeug mindestens zwei Bauteilkavitäten (11.1, 11.2) und entsprechende Bauteilbereiche (12.1, 12.2) aufweist, welche mit einem Einlegebereich (13) je über einen Einschwemmrand (14.1, 14.2) verbunden sind.

3. Verfahren nach Anspruch 1, **dadurch gekennzeichnet, dass** das Bauteil (1) und damit der Bauteilbereich (12) eine innere Ausnehmung (17) aufweisen und dass der Einlegebereich (13) durch diese Ausnehmung (17) gebildet wird.

4. Verfahren nach Anspruch 1, **dadurch gekennzeichnet, dass** sich der Einschwemmrand (14) über mindestens 25% des Umfangs (U) der Bauteilkavität (11) erstreckt und/oder sich im Wesentlichen entlang der längsten Ausdehnung (L) der Bauteilkavität (11) erstreckt.

5. Verfahren nach Anspruch 1, **dadurch gekennzeichnet, dass** die Schichtdicke (d3) der Einlegekavität (15) nach dem Verpressen kleiner ist als die Schichtdicke (d2) der Bauteilkavität (11) und/oder das Volumen der Einlegekavität höchstens 20% des Volumens der Bauteilkavität beträgt.

6. Verfahren nach Anspruch 1, **dadurch gekennzeichnet, dass** der Einlegebereich (13) durch entsprechende thermische Konditionierung (21, 22, 23) während dem Verpressen eine höhere Temperatur (T3) aufweist als der Bauteilbereich (T2).

7. Verfahren nach Anspruch 6, **dadurch gekennzeichnet, dass** der Bauteilbereich (12) gekühlt (21) wird und der Einlegebereich (13) nicht gekühlt wird oder geheizt wird (22) oder eine thermische Isolation (23) aufweist.

8. Verfahren nach Anspruch 1, **gekennzeichnet durch** Tauchkanten (25) am Einlegebereich (13), welche sich während dem Einschwemmen der LFT-Masse (2) in den Bauteilbereich im Eingriff befinden.

9. Verfahren nach Anspruch 1, **dadurch gekennzeichnet, dass** am Einschwemmrand (14) ein Schieber (26) angeordnet ist zum Abtrennen des Einlegebereichs nach erfolgtem Einschwemmen der LFT-Masse (2).

10. Anlage zur Herstellung von Bauteilen aus langfaserverstärktem Thermoplast (LFT) in einem Füesspressverfahren mit einem Werkzeug (10), mit einer Bauteilkavität (11) und mit einer zugeordneten Schmelz- und Eintragsvorrichtung (4) und einer Presse (5),
**dadurch gekennzeichnet, dass**
das zweiteilige Werkzeug (10) einen Bauteilbereich (12), mit einem Einschwemmrand (14) und einen an den Bauteilbereich anschliessenden Einlegebereich (13) aufweist
und mit einer zugeordneten Steuerung (9), welche so ausgebildet ist und welche das Werkzeug und die zugeordneten Elemente (4, 5) so steuert, dass damit eine LFT-Masse (2) mittels der Schmelz- und Eintragsvorrichtung (4) aufgeschmolzen und in den Einlegebereich (13) abgelegt wird,
dann das Werkzeug geschlossen wird und die LFT-Masse mittels der Presse vom Einlegebereich (13) über den Einschwemmrand (14) in den Bauteilbereich (12) gedrückt wird bis zum Ausfüllen der Bauteilkavität (11) und dann vollständig verpresst und anschliessend durch Abkühlung verfestigt wird.

11. Anlage nach Anspruch 10, **dadurch gekennzeichnet, dass** der Bauteilbereich des Werkzeugs eine Narbungsoberfläche (28) aufweist.

## Claims

1. An impact extrusion process for the production of components (1) from long-fiber reinforced thermoplastic (LFT), having a LFT melting- and input device (4), a press (5), a two-part tool (10) with a component cavity (11) and a controller (9),
**characterized in that**
the tool has a component area (12) with a wash-in edge (14) and an insertion area (13) adjacent to the component area, wherein the LFT mass (2) is fused by means of the melting- and input device (4) and deposited (S1) in the insertion area (13), then the tool is closed and the LFT mass is pressed (S2) by means of the press from the insertion area (13) via the wash-in edge (14) into the component area (12) until the component cavity (11) is filled, then it is completely compressed (S3) and subsequently solidified (S4) by cooling.

2. A method according to claim 1, **characterized in that** the tool has at least two component cavities (11.1, 11.2) and corresponding component areas (12.1, 12.2), which are each connected with an insertion area (13) via a wash-in edge (14.1, 14.2).

3. A method according to claim 1, **characterized in that** the component (1) and thereby the component areas (12) have an inner recess (17) and that the insertion area (13) is formed by this recess (17).

4. A method according to claim 1, **characterized in that** the wash-in edge (14) extends over at least 25% of the extent (U) of the component cavity (11) and/or essentially extends along the longest extension (L) of the component cavity (11).

5. A method according to claim 1, **characterized in that** the layer thickness (d3) of the insertion cavity (15) is smaller after the compression than the layer thickness (d2) of the component cavity (11) and/or the volume of the insertion cavity is at most 20% of the volume of the component cavity.

6. A method according to claim 1, **characterized in that** the insertion area (13) has a higher temperature (T3) than the component area (T2) as a result of the corresponding thermal conditioning (21, 22, 23) during the compression.

7. A method according to claim 6, **characterized in that** the component area (12) is cooled (21) and the insertion area (13) is not cooled or is heated (22) or has a thermal insulation (23).

8. A method according to claim 1, **characterized by** immersion edges (25) in the insertion area (13), which are engaged in the component area during the wash-in of the LFT mass (2).

9. A method according to claim 1, **characterized in that** a slider (26) is arranged on the wash-in edge (14) for separating the insertion area after the wash-in of the LFT mass (2) takes place.

10. An installation for the production of components from long-fiber reinforced thermoplastic (LFT) in an impact extrusion process with a tool (10), having a component cavity (11) and having an associated melting- and input device (4) and a press (5),
**characterized in that**
the two-part tool (10) has a component area (12), having a wash-in edge (14) and an insertion area (13) adjacent to the component area
and having a corresponding controller (9), which is designed and which controls the tool and the corresponding elements (4, 5) in such a manner, that a LFT mass (2) is thereby fused by means of the melting- and input device (4) and is deposited in the insertion area (13),
then the tool is closed and the LFT mass is pressed by means of the press from the insertion area (13) via the wash-in edge (14) into the component area (12) until the component cavity (11) is filled and then completely compressed and subsequently is solidified by cooling.

11. An installation according to claim 10, **characterized in that** the component area of the tool has a grain surface (28).

## Revendications

1. Procédé d'extrusion pour la fabrication de pièces (1) en thermoplastique renforcé à longues fibres (LFT) avec un dispositif de fusion et d'apport de LFT (4), une presse (5), un outil en deux parties (10) avec une cavité de pièce (11) et un dispositif de commande (9),
**caractérisé en ce que**
l'outil comprend une partie de pièce (12) avec un bord de pénétration (14) et une partie d'enfournement (13) adjacente à la partie de pièce, la masse de LFT (2) étant fondue à l'aide du dispositif de fusion et d'apport (4) et déposée (S1) dans la partie d'enfournement (13), l'outil étant ensuite fermé et la masse de LFT étant comprimée (S2), à l'aide de la presse, de la partie d'enfournement (13) à la partie de pièce (12) en passant par le bord de pénétration (14) jusqu'au remplissage complet de la cavité de la pièce (11), elle est ensuite entièrement comprimée (S3) puis solidifiée (S4) par refroidissement.

2. Procédé selon la revendication 1, **caractérisé en ce que** l'outil comprend au moins deux cavités de pièces (11.1, 11.2) et des parties de pièces correspondantes (12.1, 12.2), qui sont reliées avec une partie d'enfournement (13) chacune avec un bord de pénétration (14.1, 14.2).

3. Procédé selon la revendication 1, **caractérisé en ce que** la pièce (1) et donc la partie de pièce (12) comprennent un évidement interne (17) et **en ce que** la partie d'enfournement (13) est constituée de cet évidement (17).

4. Procédé selon la revendication 1, **caractérisé en ce que** le bord de pénétration (14) s'étend sur au moins 25% de la circonférence (U) de la cavité de la pièce (11) et/ou s'étend essentiellement le long de l'extension la plus longue (L) de la cavité de la pièce (11).

5. Procédé selon la revendication 1, **caractérisé en ce que** l'épaisseur de couche (d3) de la cavité d'enfournement (15) est inférieure, après la compression, à l'épaisseur de couche (d2) de la cavité de la pièce (11) et/ou le volume de la cavité d'enfournement représente au maximum 20% du volume de la cavité de la pièce.

6. Procédé selon la revendication 1, **caractérisé en ce que** la partie d'enfournement (13) présente, du fait d'un conditionnement thermique correspondant (21, 22, 23) pendant la compression, une température (T3) supérieure à celle de la partie de la pièce (T2).

7. Procédé selon la revendication 6, **caractérisé en ce que** la partie de la pièce (12) est refroidie (21) et la partie d'enfournement (13) n'est pas refroidie ou est chauffée (22) ou possède une isolation thermique (23).

8. Procédé selon la revendication 6, **caractérisé par** des arêtes plongeantes (25) sur la partie d'enfournement (13) qui s'emboîtent, pendant la pénétration de la masse LFT (2), dans la partie de pièce.

9. Procédé selon la revendication 1, **caractérisé en ce que**, sur le bord de pénétration (14), se trouve un coulisseau (26) permettant de séparer la partie d'enfournement une fois effectuée la pénétration de la masse de LFT (2).

10. Installation pour la fabrication de pièces en thermoplastique renforcé à longues fibres (LFT) à l'aide d'un procédé d'extrusion avec un outil (10), avec une cavité de pièce (11) et avec un dispositif de fusion et d'apport (4) et une presse (5), **caractérisée en ce que** l'outil en deux parties (10) comprend une partie de pièce (12), avec un bord de pénétration (14) et une partie d'enfournement (13) adjacente à la partie de pièce, et avec un dispositif de commande (9), qui est conçu et qui commande l'outil et les éléments (4, 5) correspondants de telle sorte qu'une masse LFT (2) soit fondue à l'aide du dispositif de fusion et d'apport (4) et déposée dans la partie d'enfournement (13), l'outil étant ensuite fermé et la masse LFT étant comprimée, à l'aide de la presse, de la partie d'enfournement (13) vers la partie de pièce (12) en passant par le bord de pénétration (14) jusqu'au remplissage complet de la cavité de pièce (11) puis entièrement comprimée et solidifiée par refroidissement.

11. Installation selon la revendication 10, **caractérisé en ce que** la partie de pièce de l'outil présente une surface de grenure (28).
